# EUROPEAN PATENT SPECIFICATION

(11) **EP 3 819 619 B1**
(45) Date of publication and mention of the grant of the patent: **26.06.2024**
(21) Application number: 19208233.7
(22) Date of filing: 11.11.2019
(51) Int. Cl.: G01M 5/00, G01M 11/08

(54) **APPARATUS AND METHOD FOR MONITORING A LOAD OR AN INTEGRITY OF A MECHANICAL OBJECT**
VORRICHTUNG UND VERFAHREN ZUR ÜBERWACHUNG DER LAST ODER DER INTEGRITÄT EINES MECHANISCHEN OBJEKTS
APPAREIL ET PROCÉDÉ DE SURVEILLANCE D'UNE CHARGE OU D'UNE INTÉGRITÉ D'UN OBJET MÉCANIQUE

(43) Date of publication of application: 12.05.2021
(73) Proprietor: Bayerische Motoren Werke Aktiengesellschaft, 80809 München (DE)
(72) Inventor: Wang, Wei, San Francisco, CA 94122 (US); Inonu, Mehmet, Redwood City, CA 94062 (US)

(56) References cited:
- CN-A- 103 434 639
- US-A1- 2006 233 485
- US-A1- 2012 180 552
- US-A1- 2012 314 201
- US-A1- 2015 285 705
- US-A1- 2016 202 133
- US-A1- 2018 299 301
- UTTAMCHANDANI D: "FIBRE-OPTIC SENSORS AND SMART STRUCTURES: DEVELOPMENTS AND PROSPECTS", ELECTRONICS AND COMMUNICATION ENGINEERING JOURNAL, INSTITUTION OF ELECTRICAL ENGINEERS, LONDON, GB, vol. 6, no. 5, 1 October 1994 (1994-10-01) , pages 237-246, XP000468293, ISSN: 0954-0695, DOI: 10.1049/ECEJ:19940506

## Description

### Technical field

In this disclosure embodiments are described which relate to an apparatus for monitoring a load and/or an integrity of a mechanical object of a vehicle, such as a body and/or a load bearing structure of vehicle, for example an automobile or a motorcycle.

### Background

Known systems for structural health monitoring use ultrasonic measurement techniques for performing non-destructive measurement, e.g. of a local thickness of a solid element. The measurement is based on the time taken by the ultrasound wave to return to the transmitter. This is typically performed with an ultrasonic thickness gauge, which can be implemented by a piezo-electric or an electro-magnetic transducer. Ultrasonic sound can be generated as sharply focused beams that travel in predictable patterns through a tested material. However, these methods must be calibrated for each material tested and the size of the transmitters can be large. US 2012/180552 A1 describes detection of a change of a length of an optical fiber attached to a pipe by launching an optical pulse using a laser source into one end of the optical fiber, detecting the optical pulse on another end of the optical fiber and examining time-of-flight variations. US 2016/202133 A1 describes the measurement of stresses or local deformations within a structure. A two-dimensional net comprising test bodies disposed in rows and in columns is arranged in the structure. Vertical and horizontal optical cables are used for addressing Bragg gratings within the test bodies. A stimulation system and a detection system may be integrated into the test body.

### Description

The object of the present invention is to provide an improved technology for monitoring a load and/or an integrity of a mechanical objectfor monitoring the health of a mechanical structure as comprised by a vehicle.

This problem is solved by the invention, which is defined by the subject matter of the independent claims. The dependent claims relate to corresponding embodiments. In the following, different aspects and embodiments of these aspects are disclosed, which provide additional features and advantages.

Some embodiments provide a solution for monitoring the structural integrity of an automobile. Thereby, a web of fiberoptic waveguides is placed over the body and within load bearing structures of the automobile. Through a transmitter a light signal is emitted that travels the web and is observed by a plurality of receivers arranged at different locations on the automobile. A comparison between a reference time-of-flight from a measurement taken during production of the car and from a measurement taken during usage later can unveil if the structures covered by the web have been mechanically affected. Because in this case, the time-of-flight of the light signal through the corresponding branch of the web will differ from the reference time-of-flight.

A first aspect relates to an apparatus as defined by independent claim 1.

An optical waveguide is a physical structure that guides electromagnetic waves in the optical spectrum. An optical waveguide can comprise one or more optical fibers and or one or more rectangular waveguides. In particular an optical waveguide can comprise tubes and/or cylinders of solid material in order to guide light alongside, and/or within a mechanical structure. A transmitter for transmitting a signal through the optical waveguide can comprise a receiver for receiving the signal from the optical waveguide. Transmitter and receiver can be co-located. In particular they can be implemented as a single device. The controller for determining the signal parameter can be co-located with the transmitter or with the transceiver as well. In particular, if the transmitter and the receiver are implemented in a single device this device can also comprise the controller for determining the signal parameter. The controller can also be part of the receiver or of one of a plurality of receivers.

An embodiment of the first aspect relates to an apparatus, wherein the mechanical object comprises:
- a housing,
- a body part,
- a load bearing structure,
- a chassis,
- a battery.

Generally, the mechanical object can be any kind of mechanical structure of a vehicle which is able to be equipped with an optical waveguide. The mechanical object is a part of a vehicle, in particular an automobile, a motorcycle, an airplane, or a boat. For example a mechanical object can be a mechanical part of a car such as a front and/or a rear axle. A mechanical object can also comprise the front forks of a motorcycle. In particular, the mechanical object can be an automotive part, for example a body or load bearing element of a car. Furthermore, the mechanical object can also be a battery cell or the battery housing.

An embodiment of the first aspect relates to an apparatus, wherein the optical waveguide is arranged along and/or within one or more pre-defined impact zones.

Impact zones can be locations of the mechanical object that could be affected by an undesired mechanical impact, such as an accident in case the mechanical object is a vehicle. For example, an impact zone can comprise locations on and/or within a mechanical object which are sensitive to mechanical influences. Advantageously, by placing the waveguide over and/or within one or more impact zones of a mechanical object, the impact zones will be directly monitored with respect to mechanical load or their mechanical integrity.

An embodiment of the first aspect relates to an apparatus, wherein the optical waveguide is arranged as a web on the outer surface of and/or within the mechanical object.

The waveguide can be arranged as a network comprising a certain network topology. A network comprises nodes, i.e. intersections, and links that are arranged between two nodes each. Network topologies that can be used for arranging the waveguide as a web can be a ring topology, a mesh topology, a star topology, a tree topology, or a bus topology. The waveguide can also be arranged such that all nodes are connected by links with each other. In this case the waveguide's network topology is a fully connected network topology. By arranging the waveguide as a web, the light signal can be guided over different parts of the mechanical object. Therefore, load or integrity can be monitored of different parts of the mechanical object.

Furthermore, a signal can be filtered at one or more locations in the web. By filtering the signal, the signal can be marked. Thereby, when receiving the signal, it can be inferred which path the signal travelled through the waveguide.

Additional or alternatively, network graph analysis could be performed based on the received signal in order to characterize a load and/or a deteriorated mechanical integrity. For example, a mechanical insufficiency can be analyzed with respect to its centrality in the web of the waveguide to determine how the nodes of the waveguide web are affected by the load and/or mechanical insufficiency and in particular to identify the node affected mostly by the respective mechanical event.

An embodiment of the first aspect relates to an apparatus, wherein the optical waveguide is arranged such that at least parts of the optical waveguide are arranged parallelly and/or orthogonally to each other on and/or in the mechanical object.

By arranging different links of a web of the optical waveguide parallelly to each other a signal can travel a same distance at two different locations on the mechanical object. Therefore, a load or an integrity insufficiency of the mechanical object can be characterized in more detail. The same holds for arranging links of the optical waveguide in an orthogonally manner. Then a single signal can travel a single location from different directions. Also, in this case a load or an integrity insufficiency of the mechanical object can be monitored in closer detail.

An embodiment of the first aspect relates to an apparatus, wherein the optical waveguide is arranged on one or more edges of the mechanical object.

An edge can be for example an edge of a part of a body of an automobile, for example, an edge of a door of a car. Advantageously, on the edges mechanical disturbances can have a greater effect than as on other locations of the mechanical object. A greater effect measuring at the edge a load or a mechanical insufficiency of the mechanical object can be observed more precisely.

An embodiment of the first aspect relates to an apparatus, wherein the optical waveguide is arranged at least in part as a honeycomb structure on the mechanical object.

By using a honeycomb structure, the waveguide can be arranged on and/or within the mechanical object efficiently using as little as possible material of the waveguide while covering a maximum area on or within the mechanical object.

An embodiment of the first aspect relates to an apparatus, configured to transmit a plurality of signals, in particular by comprising a plurality of transmitters each configured for transmitting one or more signals through the optical waveguide.

A plurality of receivers can be placed at different parts or locations of the mechanical object. Thereby, the plurality of signals can be sent from different parts of the mechanical object for monitoring its load and integrity. Advantageously, by using a plurality of transmitters redundancy is achieved such that even if one transmitter fails the apparatus will still be able to operate. A further advantage lies in the fact that by a plurality of transmitters a higher transmission rate of signals that travel through the waveguide can be achieved. Furthermore, by signals transmitted by different transmitters that are located at different locations on the mechanical object, different areas of the mechanical object can be monitored. If the waveguide is arranged as a web a transmitter can be arranged on a node of this web, in particular different transmitters can be arranged at different nodes of the web. Different transmitters can also be placed at a single node of the web such that the signals emitted from this node travel over different links differ in their signal pattern. In particular different transmitters can also be implemented by using the same emitter technology and by using filters to generate different signals.

An embodiment of the first aspect relates to an apparatus, comprising a plurality of receivers each configured for receiving one or more signals.

By a plurality of receivers can be located at different parts of the mechanical object. Thereby, a single signal can be measured at different locations of the mechanical object and thereby different locations of the mechanical object can be monitored for load or integrity insufficiency.

An embodiment of the first aspect relates to an apparatus, wherein the plurality of receivers is arranged in series along and/or within the optical waveguide.

A plurality of receivers can be arranged along and/or within the optical waveguide. Thereby, it is possible to sense a single signal on its way through the optical waveguide. Thereby, different areas that are covered by the optical waveguide can be sensed for load or mechanical insufficiencies. In particular the receivers can be arranged in series along one or more links within a web of the optical waveguide. By this arrangement the difference of the signal can be determined from each receiver to the next receiver. This would also facilitate the monitoring process as a location of any load or mechanical insufficiency of the mechanical object could be the determined more precisely.

An embodiment of the first aspect relates to an apparatus, wherein a signal parameter is:
- a time-of-flight; and/or
- a pattern,
of the signal.

The pattern of the signal can be an amplitude or frequency pattern of the signal. Further, a signal pattern could be a length of the signal. In particular by using different patterns, signals could be differentiated at a single receiver. For example, a sweep of is is used for a signal travelling over a door of a car and a sweep of 1.5s is used for a signal that travels over the edges of a trunk of the car.

An embodiment of the first aspect relates to an apparatus, wherein the controller is configured to determine a mechanical parameter of the mechanical object on the basis of one or more signal parameters.

A mechanical parameter of the mechanical object could in particular be a load, a flexion, a torsion, a stiffness, a damping, and/or an oscillating behavior of the mechanical object.

A second aspect relates to a method as defined by independent claim 9.

One of the transmitted and received signals can be a transmitted and received reference signal. A reference signal can be recorded, i.e. transmitted and received, during a state of the mechanical object, in which the mechanical object is not affected by any load and/or does not suffer from any mechanical insufficiency. For example, a reference signal can be recorded during a production of an automobile. Then in a later stage, a second signal or further signals can be used for monitoring the load and/or the health of the mechanical object by comparing the time-of-flight and/or the signal pattern of the second and/or the further signals with the reference signal recorded initially. If the signal deviates from the reference signal then it can be inferred that the mechanical object either bears a load and/or exhibits deteriorated mechanical integrity, for example due to an accident.

An embodiment of the second aspect relates to a method, comprising the step
- performing a machine learning algorithm to determine the change of the mechanical parameter.

A machine learning algorithm can comprise an artificial neural network, a decision tree, a support vector machine, a Bayesian network, a genetic algorithm. Furthermore, learning algorithms can be based on supervised learning, unsupervised learning, reinforcement learning, self-learning, feature learning, anomaly detection learning, and association rule learning. The object of the machine learning process can be to learn how the signal parameter is affected by different mechanical loads and/or different influences that cause differently deteriorated mechanical integrity.

An embodiment of the second aspect relates to a method, wherein determination of the change of the mechanical parameter is based on predefined information, in particular known defects of the mechanical object and/or known disturbances by which the mechanical object can be affected.

The method can be realized by a computer program when the computer program is performed on a computer, micro-controller and/or any appropriate chip and/or chipset.

### Short Description of the Figures

Further advantages and features result from the following embodiments, which refer to the figures. The figures describe the embodiments in principle and not to scale. The dimensions of the various features may be enlarged or reduced, in particular to facilitate an understanding of the described technology. For this purpose, it is shown, partly schematized, in:
Fig. 1 a waveguide with a plurality of receivers along the waveguide,
Fig. 2 a waveguide arranged as a web over a body of a vehicle,
Fig. 3 a waveguide arranged as a web with a honeycomb pattern over a housing of a battery cell.

In the following descriptions, identical reference signs refer to identical or at least functionally or structurally similar features.

In the following description reference is made to the accompanying figures which form part of the disclosure and which illustrate specific aspects in which the present disclosure can be understood. It is understood that other aspects and/or features can be used, and functional, structural or logical changes are possible without leaving the scope of this disclosure.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, an appropriate method may include a step that performs the described functionality, even if such steps are not explicitly described or represented in the figures. Similarly, a system can be provided with appropriate device features or with features to perform a particular method step. It is understood that features of the various exemplary aspects and embodiments described above or below may be combined unless expressly stated otherwise.

### Description of the Figures

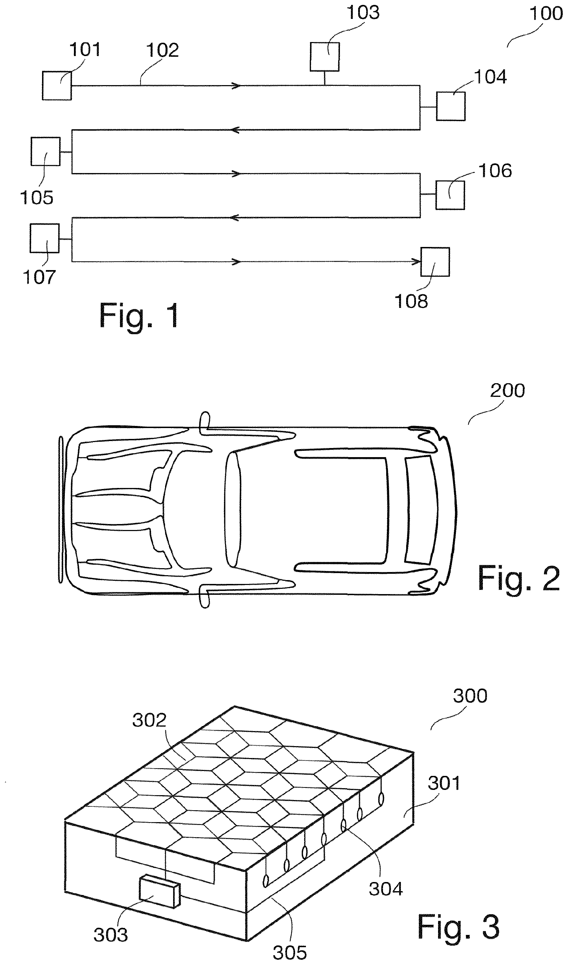

Figure 1 shows an apparatus according to one embodiment of this disclosure. Thereby, the apparatus is depicted in a principal form without showing the mechanical object that it is configured to monitor. This embodiment of the apparatus is configured to monitor a body of an automobile. An emitter 101 communicates a light signal through the waveguide 102. The waveguide 102 consists of a single link without any intersections or nodes. At the end of the waveguide a receiver 108 receives the light signal and analyses the light signal for a difference with respect to its time-of-flight from the emitter and with respect to a reference time-of-flight. Furthermore, attached to the waveguide are a plurality of other receivers. They are arranged at positions that should be monitored by the apparatus. Therefore, the waveguide is arranged along these different positions such that the light signal passes all positions when travelling through the waveguide. A first position is the front-left door, at which the receiver 103 is arranged. This receiver will compare the time-of-flight from the emitter to its location to a respective reference time-of-flight to this location. The reference time-of-flight can be for example determined during production of the vehicle when no load or deterioration of structural integrity has occurred yet. After the light signal passes the front left door it is guided by the waveguide to the right A-pillar, where receiver 104 detects its time-of-flight and compares it to a corresponding reference time-of-flight. It is clear that the time-of-flight that receiver 104 compares to a corresponding reference time-of-flight is different from the time-of-flight receiver 103 compares to a corresponding reference time-of-flight, because the distances from the emitter to the receiver 103 and from the emitter to the receiver 104 differ. After passing the right A-pillar the waveguide is guided to the left A-pillar, where receiver 105 detects the time-of-flight and compares it to the expected reference time-of-flight for the distance from the emitter to the right B-pillar. Thereafter, the signal is guided to the receiver 106 which is arranged at the right B-pillar and there after the signal travels further to the left B-pillar received by receiver 107. Finally, the signal is received by 108, arranged at the rear left door, which will also analyze the time-of-flight with respect to its position. From the measurements, damage and/or stress can be detected in form of increased time-of-flight and/or failure of light being received by one or more of the receivers indicating a break in the structure. Furthermore bends, shifts and/or misalignments in the chassis could be detected, for example at doors or liftgates. In case carbon fiber is used as a material of the mechanical object, for example a carbon fiber reinforced plastic chassis, the apparatus can detect through the light signal tears in the panels in case adhesive integrity is compromised. Calculation of the time-of-flight can be performed according to: TOF=t_receieve-t_transmitted=d_n/c, where d_n is the distance from the transmitter to the respective receiver along the transmission line.

Figure 2 shows a fiberoptic web 200 that is attached to the body of a car. The car is not depicted. The depicted architecture of the web over the car body is only an example and can in general be chosen freely according to the parameters and locations that should be monitored. In this case the web on the car is depicted from a top view. The web as different links or branches and a plurality of intersections, in order to cover different parts of the car. Further, the web is arranged in different forms and patterns depending on the form of the car body and its parts to be monitored. One possibility to arrange the links of the web is to place them at edges of the car body, for example on and/or within the edges of a pillar, of a door, of a window frame and/or of a trunk frame. In general, the optical lines can be placed along critical structural points. Further, the waveguide can be placed in known impact zones or in areas known to have wear and tear throughout the lifecycle of the vehicle. Due to the natural speed of light measuring is can be made in a constant fashion. An array of emitters and receivers can monitor the car or the chassis for an applied load and/or for deterioration of mechanical integrity. For example, a chassis flex due to excessive cargo weight can be measured and recorded in the vehicle's logbook that can then be analyzed during inspection of the car. Furthermore, by gathering the data from the receivers, unknown load-bearing structures could be identified over the lifetime of the vehicle.

Figure 3 shows an implementation of the apparatus for monitoring a load and/or a structural integrity of a battery cell 301. Battery cells are sensitive to mechanical influences and could be dangerously affected by forces that they cannot absorb. Therefore, monitoring a battery cell for mechanical impacts is an important application. In this embodiment, a web of optical lines 302 is placed over the top of a battery cell. The web comprises different honeycombed structures that are shifted against each other, thereby generating a tightly knitted web of optical lines. A transmitter 303 is placed on the battery side and sends out the light signal that enters the web through three different links. A plurality of receivers 304 are placed on another side of the battery 301. The receivers 304 are configured to communicate the detected times-of-flight to the transmitter 303 over the communication line 305. The transmitter 303 functions also as a controller which is configured to compare the times-of-flight measured by the different receivers 304 to their respective reference times. Further the transmitter 303 can store the measurements throughout the lifecycle of the battery. By applying machine learning techniques, the receiver 303 can identify certain kinds of impacts that arise during operation of the battery 301. With the help of this analysis different kinds of impacts could be differentiated and the receiver 303 can continuously communicate a holistic picture of the state of the battery cell during its lifecycle. This can be in particular important for application of the battery in a battery-powered vehicle, for example a battery electric vehicle and/or a plug-in-hybrid electric vehicle.

### List of Reference Signs

- 100 -: apparatus for body of a car
- 101 -: transmitter
- 102 -: waveguide
- 103 -: receiver
- 104 - 108 -: receiver
- 200 -: web of waveguide for a body of a car
- 300 -: apparatus applied to battery cell
- 301 -: battery cell
- 302 -: web of waveguide
- 303 -: transmitter, controller
- 304 -: receiver
- 305 -: connection line between receivers and controller

## Claims

1. An apparatus (100) for monitoring a load and/or an integrity of a mechanical object (301), comprising:
- an optical waveguide (102, 200, 302), for attaching to the mechanical object (301);
- a transmitter (101, 303) for transmitting a signal through the optical waveguide (102, 200, 302);
- a plurality of receivers (103 - 108, 304) for receiving the signal from the optical waveguide (102, 200, 302),
- a controller (303) for determining a time-of-flight, on the basis of the transmitted signal and the received signals,
wherein the optical waveguide (102, 302) is to be arranged as a web on the outer surface and/or within the mechanical object (301); and
wherein the transmitter (303) functions also as the controller which is configured to compare the times-of-flight measured by the different receivers (304) to their respective reference times.

2. The apparatus according to the preceding claim, wherein the apparatus is configured to monitor the mechanical object and the mechanical object (301) comprises:
- a housing,
- a body part,
- a load bearing structure,
- a chassis,
- a battery.

3. The apparatus according to one of the preceding claims, wherein the optical waveguide (102, 302) is arranged along one or more pre-defined impact zones.

4. The apparatus according to one of the preceding claims, wherein
the optical waveguide (102, 302) is arranged such that at least parts of the optical waveguide are arranged parallelly and/or orthogonally to each other on and/or in the mechanical object (301).

5. The apparatus according to one of the preceding claims, wherein the optical waveguide (102, 302) is arranged on one or more edges of the mechanical object (301).

6. The apparatus according to one of the preceding claims, wherein
the optical waveguide (102, 302) is arranged at least in part as a honeycomb structure on the mechanical object (301).

7. The apparatus according to one of the preceding claims, configured to transmit a plurality of signals, in particular by comprising a plurality of transmitters (101, 303) each configured for transmitting one or more signals through the optical waveguide (102, 302).

8. The apparatus according to the preceding claim, wherein
the plurality of receivers (103 - 108, 304) is arranged in series along the optical waveguide (102, 302).

9. A method for monitoring a load and/or an integrity of a mechanical object (101, 301), comprising the steps:
- transmitting, by one or more transmitters, a plurality of signals through an optical waveguide (102, 302) that is attached to a mechanical object (101, 301), wherein the optical waveguide (102, 302) is arranged as a web on the outer surface and/or within the mechanical object (301)
- receiving, by a plurality of receivers, a plurality of signals from the optical waveguide (102, 302),
- determining a change of a mechanical parameter of the mechanical object (101, 301) based on a time-of-flight of the transmitted and received signals; wherein at least one signal is transmitted from a transmitter (101, 303) that also functions as a controller which is configured to compare the times-of-flights measured by the different receivers (304) to their respective reference times.

10. The method according to the preceding claim, comprising the step
- performing a machine learning algorithm to determine the change of the mechanical parameter of the mechanical object (101, 301).

11. The method according to the two preceding claims, wherein the determination of the change of the mechanical parameter is based on predefined information, in particular known defects of the mechanical object (101, 301) and/or known disturbances by which the mechanical object can be affected.

## Patentansprüche

1. Vorrichtung (100) zum Überwachen einer Last und/oder einer Unversehrtheit eines mechanischen Objekts (301), umfassend:
- einen Lichtwellenleiter (102, 200, 302) zur Anbringung an dem mechanischen Objekt (301);
- einen Sender (101, 303) zum Übertragen eines Signals durch den Lichtwellenleiter (102, 200, 302);
- eine Vielzahl von Empfängern (103 - 108, 304) zum Empfangen des Signals von dem Lichtwellenleiter (102, 200, 302),
- eine Steuerung (303) zum Bestimmen einer Laufzeit auf Grundlage des übertragenen Signals und der empfangenen Signale,
wobei der Lichtwellenleiter (102, 302) als Netz auf der Außenfläche und/oder innerhalb des mechanischen Objekts (301) anzuordnen ist; und
wobei der Sender (303) zudem als die Steuerung fungiert, die so konfiguriert ist, dass sie die von den verschiedenen Empfängern (304) gemessenen Laufzeiten mit ihren jeweiligen Referenzzeiten vergleicht.

2. Vorrichtung nach dem vorhergehenden Anspruch, wobei die Vorrichtung so konfiguriert ist, dass sie das mechanische Objekt überwacht, und das mechanische Objekt (301) umfasst:
- ein Gehäuse,
- einen Karosserieteil,
- eine lasttragende Struktur,
- ein Fahrgestell,
- eine Batterie.

3. Vorrichtung nach einem der vorhergehenden Ansprüche, wobei der Lichtwellenleiter (102, 302) entlang einer oder mehrerer vordefinierter Aufprallzonen angeordnet ist.

4. Vorrichtung nach einem der vorhergehenden Ansprüche, wobei
der Lichtwellenleiter (102, 302) so angeordnet ist, dass zumindest Teile des Lichtwellenleiters parallel und/oder orthogonal zueinander auf und/oder in dem mechanischen Objekt (301) angeordnet sind.

5. Vorrichtung nach einem der vorhergehenden Ansprüche, wobei der Lichtwellenleiter (102, 302) an einer oder mehreren Kanten des mechanischen Objekts (301) angeordnet ist.

6. Vorrichtung nach einem der vorhergehenden Ansprüche, wobei
der Lichtwellenleiter (102, 302) zumindest teilweise als Wabenstruktur auf dem mechanischen Objekt (301) angeordnet ist.

7. Vorrichtung nach einem der vorhergehenden Ansprüche, die so konfiguriert ist, dass sie eine Vielzahl von Signalen überträgt, insbesondere indem sie eine Vielzahl von Sendern (101, 303) umfasst, die jeweils so konfiguriert sind, dass sie ein oder mehrere Signale durch den Lichtwellenleiter (102, 302) übertragen.

8. Vorrichtung nach dem vorhergehenden Anspruch, wobei die Vielzahl von Empfängern (103 - 108, 304) in Reihe entlang des Lichtwellenleiters (102, 302) angeordnet ist.

9. Verfahren zum Überwachen einer Last und/oder einer Unversehrtheit eines mechanischen Objekts (101, 301), umfassend die Schritte:
- Übertragen einer Vielzahl von Signalen durch einen Lichtwellenleiter (102, 302), der an einem mechanischen Objekt (101, 301) angebracht ist, durch einen oder mehrere Sender, wobei der Lichtwellenleiter (102, 302) als ein Netz auf der Außenfläche und/oder innerhalb des mechanischen Objekts (301) angeordnet ist,
- Empfangen einer Vielzahl von Signalen von dem Lichtwellenleiter (102, 302) durch eine Vielzahl von Empfängern,
- Bestimmen einer Änderung eines mechanischen Parameters des mechanischen Objekts (101, 301) auf Grundlage einer Laufzeit der übertragenen und empfangenen Signale; wobei mindestens ein Signal von einem Sender (101, 303) übertragen wird, der zudem als eine Steuerung fungiert, die so konfiguriert ist, dass sie die von den verschiedenen Empfängern (304) gemessenen Laufzeiten mit ihren jeweiligen Referenzzeiten vergleicht.

10. Verfahren nach dem vorhergehenden Anspruch, umfassend den Schritt
- Durchführen eines Algorithmus für maschinelles Lernen, um die Änderung des mechanischen Parameters des mechanischen Objekts (101, 301) zu bestimmen.

11. Verfahren nach den beiden vorhergehenden Ansprüchen, wobei die Bestimmung der Änderung des mechanischen Parameters auf vordefinierten Informationen, insbesondere bekannten Defekten des mechanischen Objekts (101, 301) und/oder bekannten Störungen, durch die das mechanische Objekt beeinflusst werden kann, basiert.

## Revendications

1. Appareil (100) pour surveiller une charge et/ou une intégrité d'un objet mécanique (301), comprenant :
- un guide d'ondes optique (102, 200, 302), destiné à être fixé à l'objet mécanique (301) ;
- un transmetteur (101, 303) destiné à transmettre un signal à travers le guide d'ondes optique (102, 200, 302) ;
- une pluralité de récepteurs (103 - 108, 304) destinés à recevoir le signal provenant du guide d'ondes optique (102, 200, 302),
- une unité de commande (303) destinée à déterminer un temps-de-vol, sur la base du signal transmis et des signaux reçus,
dans lequel le guide d'ondes optique (102, 302) est destiné à être agencé sous forme de toile sur la surface extérieure et/ou à l'intérieur de l'objet mécanique (301) ; et
dans lequel le transmetteur (303) fonctionne également en tant qu'unité de commande qui est configurée pour comparer les temps-de-vol mesurés par les différents récepteurs (304) à leurs temps de référence respectifs.

2. Appareil selon la revendication précédente, dans lequel l'appareil est configuré pour surveiller l'objet mécanique et l'objet mécanique (301) comprend :
- un boîtier,
- une partie corps,
- une structure porte-charge,
- un châssis,
- une batterie.

3. Appareil selon l'une des revendications précédentes, dans lequel le guide d'ondes optique (102, 302) est agencé le long d'une ou de plusieurs zones d'impact prédéfinies.

4. Appareil selon l'une des revendications précédentes, dans lequel
le guide d'ondes optique (102, 302) est agencé de telle sorte qu'au moins des parties du guide d'ondes optique soient agencées parallèlement et/ou orthogonalement les unes aux autres sur et/ou dans l'objet mécanique (301).

5. Appareil selon l'une des revendications précédentes, dans lequel le guide d'ondes optique (102, 302) est agencé sur un ou plusieurs bords de l'objet mécanique (301).

6. Appareil selon l'une des revendications précédentes, dans lequel
le guide d'ondes optique (102, 302) est agencé au moins en partie sous forme de structure en nid d'abeille sur l'objet mécanique (301).

7. Appareil selon l'une des revendications précédentes, configuré pour transmettre une pluralité de signaux, en particulier en comprenant une pluralité de transmetteurs (101, 303), chacun configuré pour transmettre un ou plusieurs signaux à travers le guide d'ondes optique (102, 302).

8. Appareil selon la revendication précédente, dans lequel
la pluralité de récepteurs (103 - 108, 304) est agencée en série le long du guide d'ondes optique (102, 302).

9. Procédé pour surveiller une charge et/ou une intégrité d'un objet mécanique (101, 301), comprenant les étapes :
- la transmission, par un ou plusieurs transmetteurs, d'une pluralité de signaux à travers un guide d'ondes optique (102, 302) qui est fixé à un objet mécanique (101, 301), dans lequel le guide d'ondes optique (102, 302) est agencé sous forme de toile sur la surface extérieure et/ou à l'intérieur de l'objet mécanique (301),
- la réception, par une pluralité de récepteurs, d'une pluralité de signaux provenant du guide d'ondes optique (102, 302),
- la détermination d'un changement d'un paramètre mécanique de l'objet mécanique (101, 301) sur la base d'un temps-de-vol des signaux transmis et reçus ; dans lequel au moins un signal est transmis à partir d'un transmetteur (101, 303) qui fonctionne également en tant qu'unité de commande qui est configurée pour comparer les temps-de-vol mesurés par les différent récepteurs (304) à leurs temps de référence respectifs.

10. Procédé selon la revendication précédente, comprenant l'étape de
- la réalisation d'un algorithme d'apprentissage machine pour déterminer le changement du paramètre mécanique de l'objet mécanique (101, 301).

11. Procédé selon les deux revendications précédentes, dans lequel la détermination du changement du paramètre mécanique est sur la base d'informations prédéfinies, en particulier de défauts connus de l'objet mécanique (101, 301) et/ou de perturbations connues par lesquelles l'objet mécanique peut être affecté.
